# EUROPÄISCHE PATENTSCHRIFT

(11) **EP 3 812 101 B1**
(45) Veröffentlichungstag und Bekanntmachung des Hinweises auf die Patenterteilung: **26.04.2023**
(21) Anmeldenummer: 20202448.5
(22) Anmeldetag: 16.10.2020
(51) Int. Cl.: B25F 5/02, B23Q 11/00, B24B 23/04, B24B 55/10

(54) **ABSAUGUNGSVORRICHTUNG**
DUST EXTRACTION DEVICE
DISPOSITIF D'ASPIRATION

(30) Priorität: 21.10.2019 DE 202019105847 U
(43) Veröffentlichungstag der Anmeldung: 28.04.2021
(73) Patentinhaber: C. & E. Fein GmbH, 73529 Schwäbisch Gmünd-Bargau (DE)
(72) Erfinder: Mann, Rainer, 73529 Schwäbisch Gmünd-Bargau (DE); Clabunde, Joachim, 73529 Schwäbisch Gmünd-Bargau (DE)
(74) Vertreter: Wallinger, Michael

(56) Entgegenhaltungen:
- DE-A1-102016 110 214
- US-A1- 2014 190 715
- US-A1- 2014 327 215
- US-A1- 2019 168 348

## Beschreibung

Die Erfindung betrifft eine Absaugungsvorrichtung für eine mit einem Getriebehals zur Befestigung der Absaugungsvorrichtung ausgestattete, oszillierend antreibbare Handwerkzeugmaschine, mit einem Grundkörper, der mittels eines Befestigungsabschnitts an dem Getriebehals der Handwerkzeugmaschine befestigbar ist, sowie mit einem in dem Grundkörper ausgebildeten Luftführungskanal, der einenends durch einen Lufteinlass und anderenends durch einen Luftauslass begrenzt ist, an dem eine Saugvorrichtung, insbesondere ein Staubsauger lösbar befestigbar ist.

Oszillierend antreibbare Handwerkzeugmaschinen, bei denen eine durch einen elektrischen Antrieb erzeugte Rotation der Antriebswelle in eine oszillierende Bewegung der mit dem Maschinenabtrieb verbundenen Werkzeugaufnahme überführt wird, werden häufig auch als oszillierende Multifunktionswerkzeuge (OMT) bezeichnet. An dieser Werkzeugaufnahme der Handwerkzeugmaschinen lassen sich nämlich unterschiedlichste Einsatzwerkzeuge befestigen, mit denen Werkstücke, vor allem solche aus Holz, bearbeitet werden können. Insbesondere bei der Verwendung von Sägeblättern sind die hierdurch entstehenden Stäube und Späne für den Nutzer jedoch äußerst nachteilig. Zum einen können die Stäube und Späne die Sicht auf den Arbeitsbereich behindern, was sich nachteilig auf das Arbeitsergebnis auswirken kann, zum anderen besteht aber auch das Problem, dass diese Stäube und Späne vom Nutzer eingeatmet werden oder in dessen Augen gelangen, was sich dann wiederum nachteilig auf die Gesundheit des Nutzers auswirkt. Daher werden für derartige Arbeiten häufig Absaugungsvorrichtungen verwendet, die die bei der Bearbeitung des Werkstückes entstehenden Stäube und Späne absaugen und damit von dem Nutzer und dem Arbeitsbereich fernhalten.

Derartige Absaugungsvorrichtungen gemäß der eingangs genannten Art sind aus dem Stand der Technik bereits seit langem bekannt und werden beispielsweise von der Anmelderin unter der Artikelnummer 32133021010 angeboten. Diese aus dem Stand der Technik bekannte Absaugungsvorrichtung hat sich vielfältig bewährt, jedoch hat es sich gezeigt, dass sich die Befestigung der Absaugungsvorrichtung an der oszillierend antreibbaren Handwerkzeugmaschine vergleichsweise umständlich gestaltet. Hierzu muss nämlich die aus Metall gefertigte Absaugungsvorrichtung an der Handwerkzeugmaschine festgeschraubt werden. Zudem hat es sich hier unter gewissen Umständen als nachteilig erwiesen, dass die Absaugungsvorrichtung nur an veränderte Einsatzmöglichkeiten anpassbar ist. Eine Absaugvorrichtung gemäß dem Oberbegriff des Anspruchs 1 ist aus der US 2014/190715A1 bekannt.

Der Erfindung liegt daher die Aufgabe zugrunde, die oben genannten Nachteile zu reduzieren.

Diese Aufgabe wird gemäß der Erfindung bei einer Absaugungsvorrichtung der eingangs genannten Art dadurch gelöst, dass der Befestigungsabschnitt des Grundkörpers im Wesentlichen hohlzylindrisch gebildet ist und sich zwischen einer ersten Ebene und einer zweiten Ebene erstreckt, die vorzugsweise parallel sind.

Hiermit ist es möglich, die Absaugungsvorrichtung auf den Getriebehals der Handwerkzeugmaschine lediglich aufzustecken, wodurch die Notwendigkeit entfällt, die Absaugungsvorrichtung an der Handwerkzeugmaschine festzuschrauben. Da der Getriebehals einen kreisförmigen Querschnitt aufweist, besteht hierdurch auch die Möglichkeit, die Absaugungsvorrichtung an dem Getriebehals drehbar zu lagern. Wenn nun also das Einsatzwerkzeug beispielsweise quer zur Antriebswelle der Handwerkzeugmaschine befestigt werden soll, so kann die Absaugungsvorrichtung einfach gedreht werden, und so positioniert werden, dass die Absaugung der Stäube und Späne unverändert gewährleistet werden kann.

Um die Absaugungsvorrichtung an dem Getriebehals der Handwerkzeugmaschine zu befestigen, hat es sich außerdem als günstig erwiesen, wenn auf der Innenseite des hohlzylindrischen Befestigungsabschnitts mindestens ein Kodierungsbereich ausgebildet ist zur Montage der Absaugungsvorrichtung an der Handwerkzeugmaschine. Hierdurch wird die Montage der Absaugungsvorrichtung erleichtert, da es durch eine korrespondierende Gestaltung des Getriebehalses letztlich nur in einer Stellung möglich ist, die Absaugungsvorrichtung auf den Getriebehals aufzusetzen. Dies ermöglicht es dem Nutzer, die Absaugungsvorrichtung zu verdrehen, ohne dass die Gefahr besteht, dass sich die Absaugungsvorrichtung unbeabsichtigt von dem Getriebehals löst. Dies ist insbesondere bei der Verwendung von Sägeblättern vorteilhaft, wenn diese unter verschiedenen Winkelstellungen an der Werkzeugaufnahme der Handwerkzeugmaschine befestigt werden sollen. Im Rahmen der Erfindung kann die Kodierung dabei insbesondere so gestaltet sein, dass ein Aufsetzen der Absaugungsvorrichtung auf den Getriebehals nur in einer Stellung möglich ist, die üblicherweise nicht für die Einsatzwerkzeuge verwendet wird, bei denen die abzusaugenden Stäube und Späne anfallen. Somit wird die Gefahr reduziert, dass sich die Absaugungsvorrichtung unbeabsichtigt von der Handwerkzeugmaschine löst.

Erfindungsgemäß hat es sich auch bewährt, wenn an dem Befestigungsabschnitt ein gegen die Kraft einer Rückstellfeder schwenkbar um eine Schwenkachse gelagerter Verriegelungsmechanismus vorgesehen ist. Hierdurch kann die Position der Absaugungsvorrichtung an dem Getriebehals der Handwerkzeugmaschine festgelegt werden, was sich positiv auf den Bedienkomfort auswirkt. Besonders bevorzugt kann der Verriegelungsmechanismus hierbei als Verriegelungshebel ausgebildet sein, der durch die Kraft der Rückstellfeder gegen den Getriebehals gedrückt wird und dort die rotatorische Lage der Absaugungsvorrichtung an dem Getriebehals festlegt. Hierdurch ist es dem Nutzer möglich, die Absaugungsvorrichtung zu verdrehen, dann aber deren Position zu fixieren, indem er den Verriegelungshebel loslässt. Hierbei hat es sich dann auch bewährt, wenn dem Verriegelungshebel eine Rastnase zugeordnet ist, die in einen korrespondierenden Rastsitz einrücken kann, der an dem Getriebehals ausgebildet ist.

Als besonders günstig hat es sich auch gezeigt, wenn der Winkel zwischen dem Lufteinlass und der ersten Ebene und/oder der zweiten Ebene zwischen 45° und 90° liegt und besonders bevorzugt 70° beträgt. Hierdurch wird erreicht, dass der Lufteinlass bei montierter Absaugungsvorrichtung in Richtung auf das verwendete Sägeblatt weist, wodurch die Absaugung der bei der Bearbeitung von Werkstücken entstehenden Stäube und Späne weiter begünstigt wird. Im Rahmen der Erfindung ist es auch vorgesehen, dass der Winkel zwischen dem Lufteinlass und der ersten Ebene und/oder der zweiten Ebene einstellbar ist.

Als vorteilhaft hat es sich weiterhin auch erwiesen, wenn der Luftauslass um mindestens eine Drehachse drehbar an dem Grundkörper gelagert ist. Hierdurch ist es dem Nutzer möglich, die Position des Luftauslasses zu verstellen, was sich insbesondere bei räumlich beengten Platzverhältnissen als vorteilhaft erwiesen hat. So wird auf einfache Art und Weise erreicht, dass die Position eines Luftschlauches einer Saugvorrichtung an die räumlichen Gegebenheiten angepasst werden kann. Im Rahmen der Erfindung hat es sich dabei als besonders vorteilhaft gezeigt, wenn genau eine Drehachse vorhanden ist. Es ist aber außerdem auch vorgesehen, dass mehrere Drehachsen vorhanden sind. Insbesondere kann der Luftauslass über ein Kugelgelenk mittelbar oder unmittelbar an dem Grundkörper befestigt werden, wodurch dem Nutzer die Möglichkeit gegeben wird, einen Luftschlauch einer Saugvorrichtung so zu positionieren, wie es die Aufgabe oder die räumlichen Gegebenheiten erfordern.

Damit der Lufteinlass bei der Verwendung der Absaugungsvorrichtung nicht in den Arbeitsbereich gelangt, was für das Arbeitsergebnis und den Arbeitsprozess nachteilig wäre, hat es sich zudem als besonders günstig erwiesen, wenn die Verdrehung des Luftauslasses um die Drehachse an dem Grundkörper zwischen einer ersten Endstellung und einer zweiten Endstellung auf einen Drehwinkel α begrenzt ist.

In diesem Zusammenhang hat es sich dann weiterhin bewährt, wenn der Drehwinkel α zwischen 45° und 180°, bevorzugt zwischen 90° und 160° und besonders bevorzugt 120° beträgt. Hierdurch wird eine Verstellbarkeit des Luftauslasses bereitgestellt, während gleichzeitig sichergestellt wird, dass der Luftauslass und eine damit verbundene Saugvorrichtung nicht störend in den Arbeitsbereich gelangt.

Die Begrenzung der Verdrehung des Luftauslasses an dem Grundkörper lässt sich dann besonders einfach realisieren, wenn an dem Grundkörper ein erster Anschlag und ein zweiter Anschlag ausgebildet sind, die mit korrespondierenden Gegenanschlägen wechselwirken, die an einem Begrenzer ausgebildet sind, der an dem drehbaren Luftauslass angeformt ist. Hierbei hat es sich dann besonders bewährt, wenn zwischen den beiden Anschlägen ein Winkel von 180° besteht und wenn zwischen den Gegenanschlägen des Begrenzers ein Winkel von 60° besteht.

Als günstig hat es sich auch erwiesen, wenn die Drehachse senkrecht zu der Schwenkachse und senkrecht zu einem Normalenvektor der ersten und/oder zweiten Ebene orientiert ist.

Um ein Eindringen von großen Spänen in den Luftführungskanal zu verhindern, hat es sich außerdem als vorteilhaft gezeigt, wenn dem Lufteinlass ein Gittereinsatz zugeordnet ist. Ein Eindringen großer Späne oder Partikel würde im schlimmsten Fall dazu führen, dass der Luftführungskanal verstopft oder eine mit dem Luftauslass verbundene Saugvorrichtung oder ein zu der Saugvorrichtung führender Luftschlauch beschädigt würde. Diese Späne bleiben außen an dem Gitter und können vom Nutzer einfach manuell abgestreift werden.

Weiterhin hat es sich als besonders günstig gezeigt, wenn in dem Gittereinsatz Öffnungen ausgebildet sind, die vorzugsweise eine zumindest annähernd rechteckige, runde oder polygonale Form aufweisen. Hierdurch wird eine ausreichende Stabilität des Gittereinsatzes gewährleistet und gleichzeitig erreicht, dass die Partikel, die abgesaugt werden sollen, in die Absaugungsvorrichtung eingesaugt werden können. Im Rahmen der Erfindung ist es aber auch vorgesehen, dass mehrere Löcher auch in einem einzigen Schlitz zusammengefasst sind.

Als vorteilhaft hat es sich in diesem Zusammenhang auch erwiesen, wenn die Anzahl der Öffnungen vorzugsweise 6 oder mehr, bevorzugt 12 oder mehr und besonders bevorzugt 24 oder mehr, und weiter vorzugsweise 64 oder weniger, bevorzugt 52 oder weniger und besonders bevorzugt 36 oder weniger, und ganz besonders bevorzugt 33 beträgt. Hierdurch wird ein guter Kompromiss zwischen der Absaugleistung und der mechanischen Stabilität erreicht, wobei dies noch weiter dadurch begünstigt wird, dass die Öffnungen mehrreihig angeordnet sind und dass die Anzahl der Reihen vorzugsweise zwischen 2 und 6 und besonders bevorzugt bei 3 liegt.

Bewährt hat es sich im Rahmen der Erfindung auch, wenn durch den Gittereinsatz in dem Grundkörper ein Aufnahmeraum für einen Filter gebildet wird. Somit kann in diesen Aufnahmeraum ein Filter eingesetzt werden, um gezielt Partikel vom Eindringen in die Absaugungsvorrichtung abzuhalten. Im Rahmen der Erfindung ist es in diesem Zusammenhang explizit auch vorgesehen, dass in dem Aufnahmeraum ein Magnet angeordnet wird, um magnetische Späne, die beispielsweise von Nägeln stammen, die in dem zu sägenden Holz enthalten sind, davon abzuhalten, von der Saugvorrichtung abgesaugt zu werden.

Als günstig hat es sich in diesem Zusammenhang auch erwiesen, wenn der Gittereinsatz lösbar an dem Grundkörper befestigt ist. Hierdurch können beispielsweise unterschiedliche Filter in dem Aufnahmeraum eingesetzt werden. Außerdem ist es hierdurch möglich, den Luftführungskanal einfach zu reinigen oder den Filter auszutauschen. Auch können dann unterschiedliche Gittereinsätze verwendet werden, die sich beispielsweise hinsichtlich der Anzahl, der Anordnung und/oder der Form der verwendeten Öffnungen und/oder hinsichtlich des Winkels unterscheiden, den der Lufteinlass gegenüber der ersten Ebene und/oder der zweiten Ebene aufweist.

Die Langlebigkeit der Absaugungsvorrichtung wird auch noch dadurch begünstigt, dass in dem Luftauslass eine drehfest mit dem Luftauslass verbundene Führungshülse vorgesehen ist, in der die Drehachse aufgenommen ist. Hierdurch ist die Drehachse selbst von dem Luftführungskanal entkoppelt, wodurch die abgesaugten Stäube und Späne nicht in die Drehachse gelangen können. Die Drehachse kann dabei an dem Grundkörper und/oder dem Luftauslass verschraubt sein.

Im Folgenden wird die Erfindung an einem in den Zeichnungen dargestellten Ausführungsbeispiel näher erläutert; es zeigen:
- Fig. 1: eine perspektivische Ansicht einer Absaugungsvorrichtung,
- Fig. 2: eine Draufsicht auf die an einer Handwerkzeugmaschine befestigte Absaugungsvorrichtung,
- Fig. 3: eine Explosionsansicht der Absaugungsvorrichtung,
- Fig. 4: eine perspektivische Ansicht der an der Handwerkzeugmaschine befestigten Absaugungsvorrichtung, und
- Fig. 5: eine Seitenansicht auf die an der Handwerkzeugmaschine befestigten Absaugungsvorrichtung.

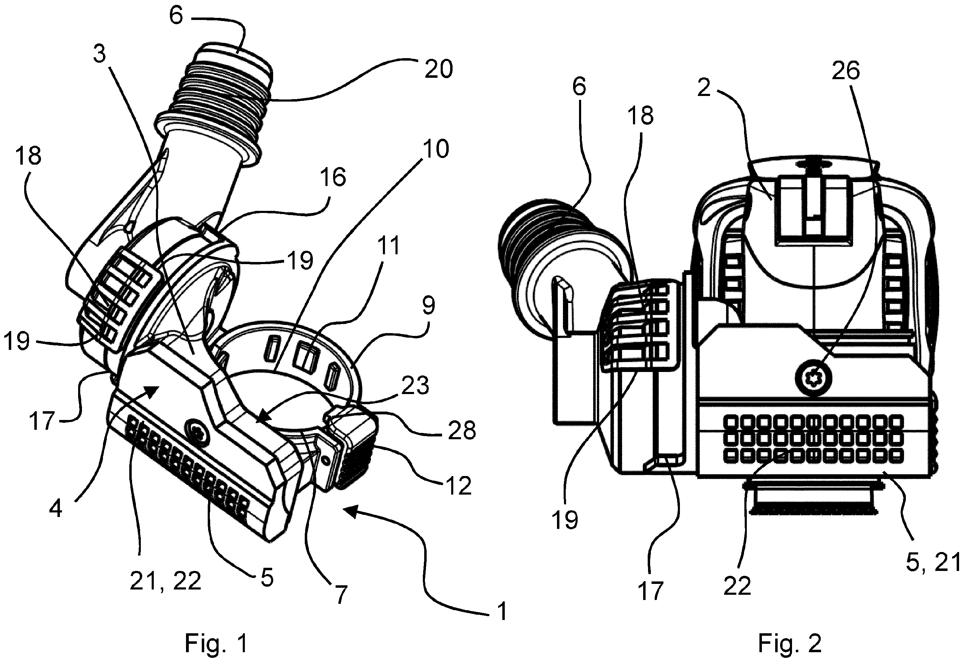

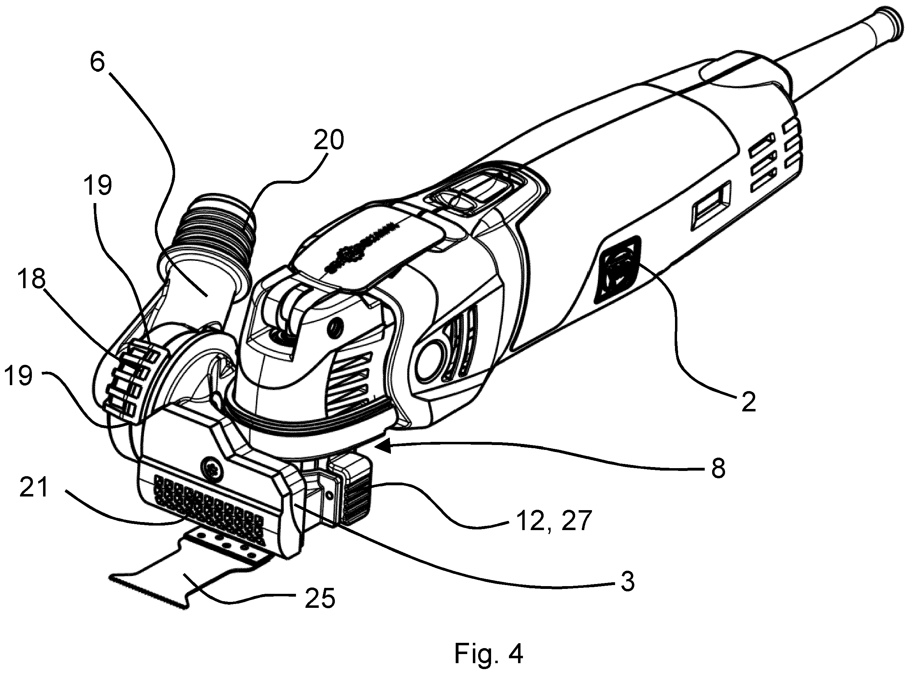

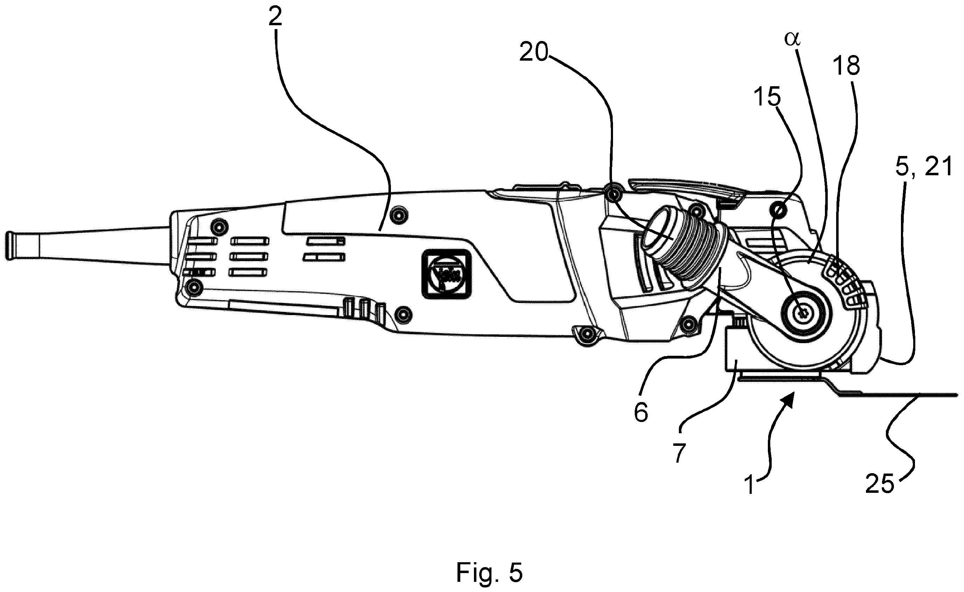

Figur 1 zeigt in einer perspektivischen Ansicht eine Absaugungsvorrichtung 1 für eine oszillierend antreibbare Handwerkzeugmaschine 2, die insbesondere noch den Figuren 4 und 5 zu entnehmen ist. Die Absaugungsvorrichtung 1 weist dabei einen Grundkörper 3 auf, in dem ein Luftführungskanal 4 ausgebildet ist, der einenends durch einen Lufteinlass 5 und anderenends durch einen Luftauslass 6 begrenzt ist. An dem Luftauslass 6 kann eine Saugvorrichtung, beispielsweise ein Staubsauger befestigt werden, wodurch die bei der Bearbeitung eines Werkstücks entstehenden Stäube und Späne durch den Luftführungskanal 4 abgesaugt werden können. An dem Grundkörper 3 ist zudem ein Befestigungsabschnitt 7 ausgebildet, mit dem die Absaugungsvorrichtung 1 an einem Getriebehals 8 der Handwerkzeugmaschine 2 befestigt werden kann. Dieser Befestigungsabschnitt 7 ist dabei im Wesentlichen hohlzylindrisch gebildet und erstreckt sich zwischen einer ersten Ebene 9 und einer zweiten Ebene 10, die in dem gezeigten Ausführungsbeispiel parallel zueinander orientiert sind.

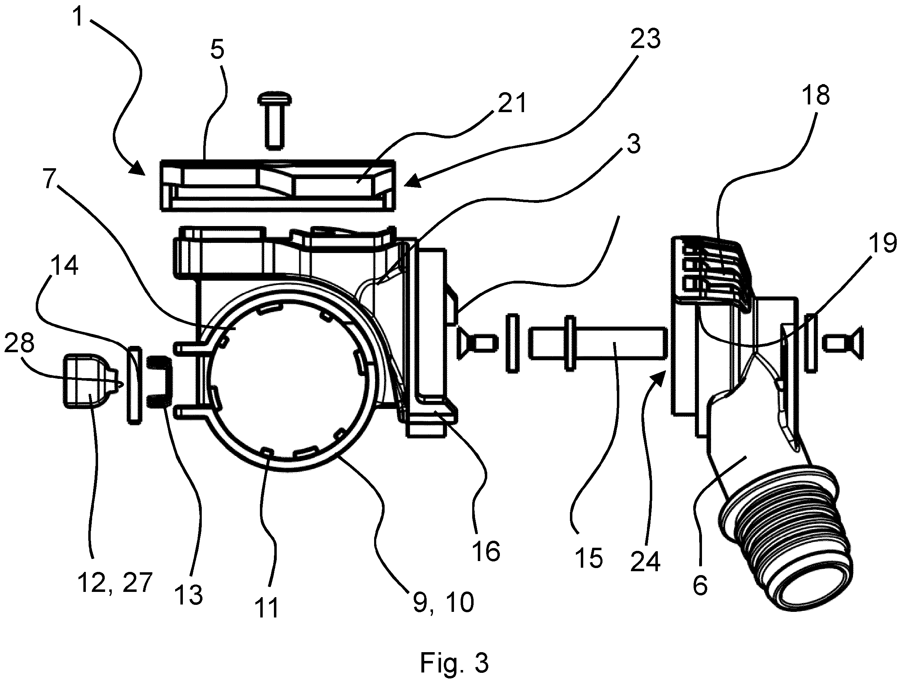

Auf der Innenseite des hohlzylindrischen Befestigungsabschnitts 7 ist ein Kodierungsbereich 11 ausgebildet, der der Montage der Absaugungsvorrichtung 1 an der Handwerkzeugmaschine 2 dient. Dieser Kodierungsbereich 11 führt dabei dazu, dass die Absaugungsvorrichtung 1 nur in einer Stellung auf den Getriebehals 8 aufgesetzt werden kann, nämlich dann, wenn die Vorsprünge des Kodierungsbereichs 11 fluchtend mit korrespondierenden Ausnehmungen sind, die an dem Getriebehals 8 der Handwerkzeugmaschine 2 ausgebildet sind. An diesem Befestigungsabschnitt 7 ist ein Verriegelungsmechanismus 12 vorgesehen, mit dem es dem Nutzer möglich ist, die Absaugungsvorrichtung 1 an dem Getriebehals 8 zu verriegeln, also insbesondere deren Drehstellung gegenüber dem Getriebehals 8 festzulegen. Wie nachstehend noch anhand der in der Figur 3 dargestellten Explosionsansicht der Absaugungsvorrichtung 1 noch näher erläutert werden wird, ist der Verriegelungsmechanismus 12 dabei gegen die Kraft einer Rückstellfeder 13 schwenkbar um eine Schwenkachse 14 gelagert.

Der Luftauslass 6 ist um eine Drehachse 15 drehbar an dem Grundkörper 3 gelagert. Hierbei ist die Verdrehung des Luftauslasses 6 um die Drehachse 15 an dem Grundkörper 3 zwischen einer ersten Endstellung und einer zweiten Endstellung auf einen Drehwinkel α begrenzt. Hierzu sind an dem Grundkörper 3 ein erster Anschlag 16 und ein zweiter Anschlag 17 ausgebildet, die einen Winkel von 180° zueinander aufweisen. An dem drehbaren Luftauslass 6 ist ein Begrenzer 18 ausgebildet, der den Grundkörper 3 übergreift und korrespondierende Gegenanschläge 19 aufweist, die mit den an dem Grundkörper 3 ausgebildeten Anschlägen wechselwirken. Der Begrenzer 18 ist dabei kreisbogenförmig gebildet und weist zwischen den beiden Gegenanschlägen 19 einen Winkel von 60° auf. Damit ergibt sich ein Drehwinkel α von 120°. Die Drehachse 15 ist dabei senkrecht zu der Schwenkachse 14 und senkrecht zu einem Normalenvektor der ersten Ebene 9 und/oder der zweiten Ebene 10 orientiert. In einem Gittereinsatz 21, der an dem Lufteinlass 5 angeordnet ist, sind Öffnungen 22 ausgebildet, die in dem gezeigten Ausführungsbeispiel eine annähernd rechteckige Form aufweisen. Insgesamt sind hierbei insgesamt 33 Öffnungen 22 ausgebildet, die in drei Reihen angeordnet sind. Der Gittereinsatz 21 ist dabei lösbar an dem Grundkörper 3 befestigt, wodurch es möglich ist, verschiedene Gittereinsätze 21 zu verwenden, oder den Grundkörper 3 zu reinigen. Der Winkel zwischen dem Lufteinlass 5 und der ersten Ebene 9 und/oder der zweiten Ebene 10 liegt zwischen 45° und 90°, nämlich bei 70°. Durch den Gittereinsatz 21 wird in dem Grundkörper 3 zudem ein Aufnahmeraum 23 ausgebildet, der es ermöglicht, hier einen Filter einzusetzen.

Die in der Figur 2 dargestellte Draufsicht zeigt in einer Frontansicht die an einer Handwerkzeugmaschine 2 befestigte Absaugungsvorrichtung 1. Hieraus wird insbesondere die Position des zweiten Anschlages 17 an dem Grundkörper 3 und die Gestaltung des Begrenzers 18 deutlich. Der Figur 2 ist auch eine als Befestigungsmittel dienende Schraube 26 zu entnehmen, mit der der Gittereinsatz 21 an dem Grundkörper 3 lösbar verschraubt werden kann.

Der in der Figur 3 dargestellten Explosionsansicht der Absaugungsvorrichtung 1 ist dabei insbesondere zu entnehmen, dass die Drehachse 15 senkrecht zu der Schwenkachse 14 angeordnet ist und dass beide Achsen 14, 15 zudem senkrecht zu einem Normalenvektor der ersten Ebene 9 und/oder zweiten Ebene 10 orientiert sind. Weiterhin zeigt die Figur 3 auch, dass der Gittereinsatz 21 mit dem Grundkörper 3 durch die Schraube 26 verschraubt ist, wodurch es möglich ist, diesen einfach zu wechseln. Zudem wird hierdurch der Aufnahmeraum 23 zugänglich, um den Luftführungskanal 4 zu reinigen. Auch die Drehachse 15 ist in dem gezeigten Ausführungsbeispiel verschraubt und zwar sowohl in dem Grundkörper 3 aber auch in dem Luftauslass 6. In dem Luftauslass 6 selbst ist eine drehfest mit diesem verbundene Führungshülse 24 ausgebildet, in der die Drehachse 15 aufgenommen ist, um diese vor Staub zu schützen. Der Verriegelungsmechanismus 12, der hier als ein Verriegelungshebel 27 gebildet ist, weist eine Rastnase 28 auf, mit der sich die Absaugungsvorrichtung 1 an dem Getriebehals 8 der Handwerkzeugmaschine 2 arretieren lässt.

Die Figur 4 zeigt eine Draufsicht auf die an der Handwerkzeugmaschine 2 befestigte Absaugungsvorrichtung 1. Bei dieser Abbildung - aber auch bei der Figur 5 - ist an der Werkzeugaufnahme der Handwerkzeugmaschine 2 ein Sägeblatt 25 befestigt, das als Einsatzwerkzeug dient. Den Figuren 4 und 5 ist zudem zu entnehmen, dass der Lufteinlass 5 gegenüber der ersten Ebene 9 und der zweiten Ebene 10 um einen Winkel von 70° geneigt ist. Hierdurch können bei der Verwendung der Absaugungsvorrichtung 1 mit einer Handwerkzeugmaschine 2, an der ein Sägeblatt 25 befestigt ist, die bei der Bearbeitung eines Werkstücks entstehenden Stäube und Späne einfach abgesaugt werden.

Neben der zuvor beschriebenen Neigung des Lufteinlasses 5 ist der Figur 5 auch zu entnehmen, dass an dem Luftauslass 6 ein Anschlussstutzen 20 ausgebildet ist, an den eine Saugvorrichtung einfach aufgesteckt werden kann.

Nachstehend wird noch einmal die Funktionsweise der Erfindung eingehend beschreiben. Bevor ein Einsatzwerkzeug, in diesem Fall das Sägeblatt 25, auf die Werkzeugaufnahme der Handwerkzeugmaschine 2 aufgesetzt wird, wird zunächst die erfindungsgemäße Absaugungsvorrichtung 1 mit dem Getriebehals 8 der Handwerkzeugmaschine 2 verbunden. Aufgrund der Kodierung kann die Absaugungsvorrichtung 1 lediglich in einer einzigen Position auf den Getriebehals 8 der Handwerkzeugmaschine 2 aufgesetzt werden. Daher müssen die in dem Kodierungsbereich 11 ausgebildeten Vorsprünge, die als Kodierung dienen und die auf der Innenseite des hohlzylindrisch geformten Befestigungsabschnitts 7 angebracht sind, so zu dem Getriebehals 8 ausgerichtet werden, dass die Absaugungsvorrichtung 1 auf den Getriebehals 8 aufgesetzt werden kann. Beim Aufsetzen muss der Nutzer den als Verriegelungsmechanismus 12 dienenden Verriegelungshebel 27 gegen die Kraft der Rückstellfeder 13 verschwenken. Nun kann der Nutzer die Absaugungsvorrichtung 1 an dem Getriebehals 8 arretieren, indem er diese verdreht, bis die Rastnase 28 des Verriegelungshebels 27 in Eingriff mit einem an dem Getriebehals 8 ausgebildeten Rastsitz gelangt. Durch die Kraft der Rückstellfeder 13 wird die Rastnase 28 dabei in den Rastsitz gedrückt. Wenn der Nutzer das Sägeblatt 25 nun in einer anderen Position befestigt, so kann er die Absaugungsvorrichtung 1 ebenfalls verstellen. Hierzu muss er lediglich den Verriegelungshebel 27 gegen die Kraft der Rückstellfeder 13 aus dem Rastsitz ausrücken und die Absaugungsvorrichtung 1 verdrehen. In dem nächsten Rastsitz rückt die Rastnase 28 dann erneut durch die Rückstellfeder 13 ein und die Absaugungsvorrichtung 1 ist erneut an dem Getriebehals 8 verriegelt.

In dem gezeigten Ausführungsbeispiel ist der Luftauslass 6 an der Drehachse 15 drehbar gelagert und ermöglicht es dem Nutzer damit, die Position eines mit der Absaugungsvorrichtung 1 verbundenen Schlauches einer Saugvorrichtung, beispielsweise eines Staubsaugers, zu verändern, wodurch dieser stets in eine für den Nutzer nicht störende Position gebracht werden kann. Um die Saugvorrichtung einfach mit der Absaugungsvorrichtung 1 verbinden zu können, ist an dem Luftauslass 6 der Anschlussstutzen 20 ausgebildet, auf den der Nutzer die Saugvorrichtung lediglich aufstecken muss.

### Bezugszeichenliste

- 1: Absaugungsvorrichtung
- 2: Handwerkzeugmaschine
- 3: Grundkörper
- 4: Luftführungskanal
- 5: Lufteinlass
- 6: Luftauslass
- 7: Befestigungsabschnitt
- 8: Getriebehals
- 9: erste Ebene
- 10: zweite Ebene
- 11: Kodierungsbereich
- 12: Verriegelungsmechanismus
- 13: Rückstellfeder
- 14: Schwenkachse
- 15: Drehachse
- 16: erster Anschlag
- 17: zweiter Anschlag
- 18: Begrenzer
- 19: Gegenanschlag
- 20: Anschlussstutzen
- 21: Gittereinsatz
- 22: Öffnung
- 23: Aufnahmeraum
- 24: Führungshülse
- 25: Sägeblatt
- 26: Schraube
- 27: Verriegelungshebel
- 28: Rastnase
- α: Drehwinkel

## Patentansprüche

1. Absaugungsvorrichtung (1) für eine mit einem Getriebehals (8) zur Befestigung der Absaugungsvorrichtung (1) ausgestattete, oszillierend antreibbare Handwerkzeugmaschine (2), mit einem Grundkörper (3), der mittels eines Befestigungsabschnitts (7) an dem Getriebehals (8) der Handwerkzeugmaschine (2) befestigbar ist, sowie mit einem in dem Grundkörper (3) ausgebildeten Luftführungskanal (4), der einenends durch einen Lufteinlass (5) und anderenends durch einen Luftauslass (6) begrenzt ist, an dem eine Saugvorrichtung, insbesondere ein Staubsauger lösbar befestigbar ist, wobei der Befestigungsabschnitt (7) des Grundkörpers (3) im Wesentlichen hohlzylindrisch gebildet ist und sich zwischen einer ersten Ebene (9) und einer zweiten Ebene (10) erstreckt, die vorzugsweise parallel sind, **dadurch gekennzeichnet, dass** an dem Befestigungsabschnitt (7) ein gegen die Kraft einer Rückstellfeder (13) schwenkbar um eine Schwenkachse (14) gelagerter Verriegelungsmechanismus (12) vorgesehen ist.

2. Absaugungsvorrichtung (1) nach Anspruch 1, **dadurch gekennzeichnet, dass** auf der Innenseite des hohlzylindrischen Befestigungsabschnitts (7) mindestens ein Kodierungsbereich (11) ausgebildet ist zur Montage der Absaugungsvorrichtung (1) an der Handwerkzeugmaschine (2).

3. Absaugungsvorrichtung (1) nach einem der Ansprüche 1 oder 2, **dadurch gekennzeichnet, dass** der Winkel zwischen dem Lufteinlass (5) und der ersten Ebene (9) und/oder der zweiten Ebene (10) zwischen 45° und 90° liegt und besonders bevorzugt 70° beträgt.

4. Absaugungsvorrichtung (1) nach einem der Ansprüche 1 bis 3, **dadurch gekennzeichnet, dass** der Luftauslass (6) um mindestens eine Drehachse (15) drehbar an dem Grundkörper (3) gelagert ist.

5. Absaugungsvorrichtung (1) nach Anspruch 4, **dadurch gekennzeichnet, dass** die Verdrehung des Luftauslasses (6) um die Drehachse (15) an dem Grundkörper (3) zwischen einer ersten Endstellung und einer zweiten Endstellung auf einen Drehwinkel α begrenzt ist.

6. Absaugungsvorrichtung (1) nach Anspruch 5, **dadurch gekennzeichnet, dass** der Drehwinkel α zwischen 45° und 180°, bevorzugt zwischen 90° und 160° und besonders bevorzugt 120° beträgt.

7. Absaugungsvorrichtung (1) nach Anspruch 5 oder 6, **dadurch gekennzeichnet, dass** zur Begrenzung der Verdrehung an dem Grundkörper (3) ein erster Anschlag (16) und ein zweiter Anschlag (17) ausgebildet sind, die mit korrespondierenden Gegenanschlägen (19) wechselwirken, die an einem Begrenzer (18) am drehbaren Luftauslass (6) ausgebildet sind.

8. Absaugungsvorrichtung (1) nach einem der Ansprüche 4 bis 7, **dadurch gekennzeichnet, dass** die Drehachse (15) senkrecht zu der Schwenkachse (14) und senkrecht zu einem Normalenvektor der ersten Ebene (9) und/oder zweiten Ebene (10) orientiert ist.

9. Absaugungsvorrichtung (1) nach einem der Ansprüche 1 bis 8, **dadurch gekennzeichnet, dass** dem Lufteinlass (5) ein Gittereinsatz (21) zugeordnet ist.

10. Absaugungsvorrichtung (1) nach Anspruch 9, **dadurch gekennzeichnet, dass** in dem Gittereinsatz (21) Öffnungen (22) ausgebildet sind, die vorzugsweise eine zumindest annähernd rechteckige, runde oder polygonale Form aufweisen und vorzugsweise mehrreihig angeordnet sind, wobei die Anzahl der Reihen besonders bevorzugt zwischen 2 und 6 und ganz besonders bevorzugt bei 3 liegt.

11. Absaugungsvorrichtung (1) nach Anspruch 10, **dadurch gekennzeichnet, dass** die Anzahl der Öffnungen (22) zwischen einschließlich 6 und 64 beträgt.

12. Absaugungsvorrichtung (1) nach einem der Ansprüche 9 bis 11, **dadurch gekennzeichnet, dass** durch den Gittereinsatz (21) in dem Grundkörper (3) ein Aufnahmeraum (23) für einen Filter gebildet wird.

13. Absaugungsvorrichtung (1) nach einem der Ansprüche 9 bis 12, **dadurch gekennzeichnet, dass** der Gittereinsatz (21) lösbar an dem Grundkörper (3) befestigt ist.

14. Absaugungsvorrichtung (1) nach einem der Ansprüche 1 bis 13, **dadurch gekennzeichnet, dass** in dem Luftauslass (6) eine drehfest mit dem Luftauslass (6) verbundene Führungshülse (24) vorgesehen ist, in der eine Drehachse (15) aufgenommen ist.

## Claims

1. Suction device (1) for an oscillatingly drivable hand-held machine tool (2) equipped with a gear neck (8) for fastening the suction device (1), comprising a base body (3) which is mountable to the gear neck (8) of the hand-held machine tool (2) by means of a fastening section (7), and comprising an air guide duct (4) which is formed in the base body (3) and is delimited at one end by an air inlet (5) and at the other end by an air outlet (6), to which a sucking device, in particular a vacuum cleaner, is detachably mountable, wherein the fastening section (7) of the base body (3) being formed essentially hollow-cylindrically and extending between a first plane (9) and a second plane (10), which are preferably parallel, **characterized in that** a locking mechanism (12), which is mounted such that it can pivot about a pivot axis (14) counter to the force of a return spring (13), is provided on the fastening section (7).

2. Suction device (1) according to claim 1, **characterized in that** at least one coding area (11) is formed on the inside of the hollow cylindrical fastening section (7) for mounting the suction device (1) on the hand-held tool (2).

3. Suction device (1) according to one of claims 1 or 2, **characterized in that** the angle between the air inlet (5) and the first plane (9) and/or the second plane (10) is between 45° and 90° and is most preferably 70°.

4. Suction device (1) according to one of claims 1 to 3, **characterized in that** the air outlet (6) is rotatably mounted on the base body (3) about at least one axis of rotation (15).

5. Suction device (1) according to claim 4, **characterized in that** the rotation of the air outlet (6) about the axis of rotation (15) on the base body (3) between a first end position and a second end position is limited to an angle of rotation α.

6. Suction device (1) according to claim 5, **characterized in that** the angle of rotation α is between 45° and 180°, preferably between 90° and 160° and particularly preferably 120°.

7. Suction device (1) according to claim 5 or 6, **characterized in that**, in order to limit the rotation, a first stop (16) and a second stop (17) are formed on the base body (3), which interact with corresponding counterstops (19) formed on a limiter (18) on the rotatable air outlet (6).

8. Suction device (1) according to one of claims 4 to 7, **characterized in that** the axis of rotation (15) is oriented perpendicular to the pivot axis (14) and perpendicular to a normal vector of the first plane (9) and/or second plane (10).

9. Suction device (1) according to one of claims 1 to 8, **characterized in that** a grid insert (21) is associated with the air inlet (5).

10. Suction device (1) according to claim 9, **characterized in that** openings (22) are formed in the grid insert (21), which openings preferably comprise a at least approximately rectangular, round or polygonal shape and are preferably arranged in multiple rows, wherein the number of rows being particularly preferably between 2 and 6 and very particularly preferably 3.

11. Suction device (1) according to claim 10, **characterized in that** the number of openings (22) is between 6 and 64 inclusive.

12. Suction device (1) according to one of claims 9 to 11, **characterized in that** a receiving space (23) for a filter is formed by the grid insert (21) in the base body (3).

13. Suction device (1) according to one of claims 9 to 12, **characterized in that** the grid insert (21) is detachably fastened to the base body (3).

14. Suction device (1) according to one of the claims 1 to 13, **characterized in that** a guide sleeve (24) is provided in the air outlet (6), which guide sleeve is connected to the air outlet (6) in a rotationally fixed manner and in which an axis of rotation (15) is accommodated.

## Revendications

1. Dispositif d'aspiration (1) pour une machine-outil manuelle (2) équipée d'un col d'engrenage (8) pour la fixation du dispositif d'aspiration (1), pouvant être entraînée de manière oscillante, avec un corps de base (3), qui peut être fixé au moyen d'une section de fixation (7) sur le col d'engrenage (8) de la machine-outil manuelle (2), ainsi qu'avec un canal de guidage d'air (4) réalisé dans le corps de base (3), qui est d'une part limité par une entrée d'air (5) et d'autre part par une sortie d'air (6), sur laquelle un dispositif d'aspiration, en particulier un aspirateur, peut être fixé de manière amovible, dans lequel la section de fixation (7) du corps de base (3) est sensiblement de forme cylindrique et s'étend entre un premier plan (9) et un deuxième plan (10), qui sont de préférence parallèles, **caractérisé en ce qu'**un mécanisme de verrouillage (12) monté de manière à pouvoir pivoter autour d'un axe de pivotement (14) à l'encontre de la force d'un ressort de rappel (13) est prévu sur la section de fixation (7).

2. Dispositif d'aspiration (1) selon la revendication 1, **caractérisé en ce qu'**au moins une zone de codage (11) est réalisée sur la face intérieure de la section de fixation (7) cylindrique creuse pour le montage du dispositif d'aspiration (1) sur la machine-outil manuelle (2).

3. Dispositif d'aspiration (1) selon l'une quelconque des revendications 1 ou 2, **caractérisé en ce que** l'angle entre l'entrée d'air (5) et le premier plan (9) et/ou le deuxième plan (10) est compris entre 45° et 90° et est de manière particulièrement préférée de 70°.

4. Dispositif d'aspiration (1) selon l'une quelconque des revendications 1 à 3, **caractérisé en ce que** la sortie d'air (6) est montée sur le corps de base (3) de manière à pouvoir tourner autour d'au moins un axe de rotation (15).

5. Dispositif d'aspiration (1) selon la revendication 4, **caractérisé en ce que** la rotation de la sortie d'air (6) autour de l'axe de rotation (15) sur le corps de base (3) entre une première position finale et une deuxième position finale est limitée à un angle de rotation α.

6. Dispositif d'aspiration (1) selon la revendication 5, **caractérisé en ce que** l'angle de rotation α est compris entre 45° et 180°, de manière préférée entre 90° et 160° et est de manière particulièrement préférée de 120°.

7. Dispositif d'aspiration (1) selon la revendication 5 ou 6, **caractérisé en ce qu'**une première butée (16) et une deuxième butée (17) sont réalisées pour limiter la rotation sur le corps de base (3), lesquelles interagissent avec des contre-butées (19) correspondantes réalisées sur un limiteur (18) sur la sortie d'air (6) pivotante.

8. Dispositif d'aspiration (1) selon l'une quelconque des revendications 4 à 7, **caractérisé en ce que** l'axe de rotation (15) est orienté de manière perpendiculaire à l'axe de pivotement (14) et de manière perpendiculaire à un vecteur normal du premier plan (9) et/ou du deuxième plan (10).

9. Dispositif d'aspiration (1) selon l'une quelconque des revendications 1 à 8, **caractérisé en ce qu'**un insert grillagé (21) est associé à l'entrée d'air (5).

10. Dispositif d'aspiration (1) selon la revendication 9, **caractérisé en ce que** sont réalisées dans l'insert grillagé (21) des ouvertures (22), qui présentent de préférence une forme au moins approximativement rectangulaire, ronde ou polygonale et qui sont disposées de préférence en rangées multiples, dans lequel le nombre des rangées est compris de manière particulièrement préférée entre 2 et 6 et est de manière très particulièrement préférée de l'ordre de 3.

11. Dispositif d'aspiration (1) selon la revendication 10, **caractérisé en ce que** le nombre des ouvertures (22) est compris entre 6 et 64 inclus.

12. Dispositif d'aspiration (1) selon l'une quelconque des revendications 9 à 11, **caractérisé en ce qu'**un espace de logement (23) pour un filtre est formé dans le corps de base (3) à travers l'insert grillagé (21).

13. Dispositif d'aspiration (1) selon l'une quelconque des revendications 9 à 12, **caractérisé en ce que** l'insert grillagé (21) est fixé de manière amovible sur le corps de base (3).

14. Dispositif d'aspiration (1) selon l'une quelconque des revendications 1 à 13, **caractérisé en ce qu'**est prévue dans la sortie d'air (6) une douille de guidage (24) reliée de manière solidaire en rotation à la sortie d'air (6), dans laquelle est logé un axe de rotation (15).
